# EUROPÄISCHE PATENTSCHRIFT

(11) **EP 1 500 920 B1**
(45) Veröffentlichungstag und Bekanntmachung des Hinweises auf die Patenterteilung: **01.06.2011**
(21) Anmeldenummer: 04014145.9
(22) Anmeldetag: 16.06.2004
(51) Int. Cl.: G01N 17/00

(54) **Kalibrierung von Temperatursensoren von Bewitterungsgeräten durch kontaktlose Temperaturmessung**
Calibration of temperature sensors in weathering devices by contactless temperature measurement
Etalonnage, par mesure sans contact, de capteurs de température utilisés dans des installations simulant des conditions climatologiques

(30) Priorität: 24.07.2003 DE 10333774
(43) Veröffentlichungstag der Anmeldung: 26.01.2005
(73) Patentinhaber: Atlas Material Testing Technology GmbH, 63589 Linsengericht/Altenhasslau (DE)
(72) Erfinder: Schönlein, Artur, Dr., 65428 Rüsselsheim (DE); Dickert, Martin, 63571 Gelnhausen (DE)
(74) Vertreter: Graf Lambsdorff, Matthias

(56) Entgegenhaltungen:
- EP-A- 0 320 209
- EP-A- 1 248 097
- US-A- 4 984 902
- US-A- 5 220 840
- US-A- 5 707 146
- US-A1- 2003 214 996

## Beschreibung

Die vorliegende Erfindung betrifft ein Verfahren zur Kalibrierung von Temperatursensoren, wie sie insbesondere in Vorrichtungen zur künstlichen Bewitterung von Proben eingesetzt werden. Derartige Temperatursensoren sind unter den Bezeichnungen Schwarztafelsensor, Schwarzstandardsensor oder Weißstandardsensor bekannt. Die Erfindung betrifft ferner eine Vorrichtung zur Durchführung des Kalibrierungsverfahrens.

In Vorrichtungen zur künstlichen Bewitterung von Werkstoffproben soll die Lebensdauer von Werkstoffen abgeschätzt werden, die in ihrer Anwendung ständig den natürlichen Wetterverhältnissen ausgesetzt sind und sich somit unter klimatischen Einflüssen wie Sonnenlicht, Sonnenwärme, Feuchtigkeit und dgl. verschlechtern. Um eine gute Simulation der natürlichen Witterungsgegebenheiten zu erhalten, muss die spektrale Energieverteilung des in der Vorrichtung erzeugten Lichtes möglichst derjenigen der natürlichen Sonnenstrahlung entsprechen, aus welchem Grund in solchen Geräten als Strahlenquellen Xenonstrahler eingesetzt werden. Eine zeitraffende Alterungsprüfung der Werkstoffe wird im Wesentlichen durch eine gegenüber den natürlichen Verhältnissen stark intensivierte Bestrahlung der Proben erzielt, durch die die Alterung der Proben beschleunigt wird. Somit lässt sich nach verhältnismäßig kurzer Zeit eine Aussage über das Langzeit-Alterungsverhalten einer Werkstoffprobe machen.

Ein Großteil der in künstlichen Bewitterungsgeräten untersuchten Proben bestehen aus polymeren Werkstoffen. Bei diesen wird die witterungsbedingte Verschlechterung im Wesentlichen durch den UV-Anteil der Sonnenstrahlung hervorgerufen. Die dabei ablaufenden fotochemischen Primärprozesse, also die Absorption von Photonen und die Erzeugung angeregter Zustände oder freier Radikale, sind temperaturunabhängig. Dagegen können die nachfolgenden Reaktionsschritte mit den Polymeren oder Additiven temperaturabhängig sein, so dass die beobachtete Alterung der Werkstoffe ebenfalls temperaturabhängig ist. Der Grad der Temperaturabhängigkeit ist vom Werkstoff und der betrachteten Eigenschaftsänderung abhängig.

Um dieser Tatsache Rechnung zu tragen, wird im Allgemeinen bei der künstlichen Bewitterung von polymeren Werkstoffen die Raumtemperatur und/oder die Probentemperatur konstant gehalten. Die Konstanthaltung und die Kenntnis der Temperaturen sind wegen der Temperaturabhängigkeit der Alterung notwendig, um die Resultate verschiedener Bewitterungsläufe untereinander vergleichen zu können.

Da es problematisch ist, die Probentemperatur der zu untersuchenden Werkstoffproben direkt zu messen, werden in Bewitterungsgeräten Temperatursensoren eingesetzt, deren gemessene Temperatur als ein Maß für die Probentemperatur verwendet wird. Beispielsweise kann ein Schwarztafelsensor als ein derartiger Temperatursensor zum Einsatz kommen. In der Druckschrift EP 0 320 209 A2 wird ein Bewitterungsgerät beschrieben, welches eine Bewitterungskammer aufweist, in der eine Xenonlampe als Lichtquelle zur Abgabe von Licht mit einer vorbestimmten Intensität vorgesehen ist. Innerhalb der Bewitterungskammer befindet sich ein zylindersymmetrischer Probenhalterrahmen, der um die Lichtquelle drehbar ist. Von diesem Probenhalterrahmen werden sowohl zu untersuchende Werkstoffproben als auch Schwarztafelsensoren getragen. Die Werkstoffproben und die Schwarztafelsensoren sind somit unter gleichen Bedingungen dem Strahlungsfeld der Lichtquelle und den übrigen, innerhalb der Bewitterungskammer eingestellten Bedingungen ausgesetzt. Um die Probentemperatur innerhalb bestimmter Grenzen steuern zu können und um sie innerhalb der Bewitterungskammer zu vergleichsmäßigen, wird zusätzlich ein Luftstrom in die Bewitterungskammer eingeleitet, der zylindersymmetrisch bezüglich der Lichtquelle an dem Probenhalterrahmen und den darin gehalterten Werkstoffproben und Schwarztafelsensoren vorbeistreicht. Der Luftstrom führt dabei einen Teil der Wärme der Werkstoffproben und Schwarztafelsensoren ab. Dies kann für eine Temperaturregelung ausgenutzt werden, indem die von den Schwarztafelsensoren gemessene Temperatur als Regelsignal für die Stärke des in die Bewitterungskammer eingeleiteten Luftstroms verwendet wird.

Die als Temperatursensoren verwendeten Schwarztafelsensoren, Schwarzstandardsensoren und Weißstandardsensoren sind sämtlich so aufgebaut, dass sie eine Metallplatte mit einer im Betrieb der Lichtquelle zugewandten lackierten Oberfläche und ein an die Metallplatte auf deren Rückseite thermisch angekoppeltes temperaturabhängiges elektrisches Bauelement aufweisen. Das elektrische Bauelement wird dabei in der Regel durch einen temperaturabhängigen Widerstand wie einen Platinwiderstand (handelsübliche Bezeichnungen Pt100 oder Pt1000) gebildet und ist mit einer elektrischen Messumformerschaltung verbunden.

Ein Schwarzstandardsensor weist im Einzelnen eine einseitig schwarz lackierte Edelstahlplatte (Dicke 1 mm), einen an der unbeschichteten Rückseite thermisch angekoppelten Pt100- oder Pt1000-Widerstand, eine auf die Rückseite aufgebrachte und den Platinwiderstand umschließende Kunststoffplatte aus PVDF (Polyvinylidenfluorid) und eine Abschlussplatte aus Edelstahl auf. Ein Weißstandardsensor ist in entsprechender Weise aufgebaut, mit dem Unterschied, dass die im Betrieb der Lichtquelle zugewandte Oberfläche weiß lackiert ist. Ein Schwarztafelsensor besteht im Unterschied zu dem Schwarzstandardsensor aus einer beidseitig geschwärzten Metallplatte ohne PVDF-Isolierung. Der temperaturabhängige Widerstand ist ohne umgebende Isolierung auf die Rückseite aufgebracht.

In Bewitterungsgeräten nach heutigem Standard werden Schwarzstandard- oder Schwarztafelsensoren eingesetzt, um für jeden Bewitterungsprozess eine Schwarzstandardtemperatur angeben zu können. Die Schwarzstandardtemperatur stellt eine obere Grenze für den in Frage kommenden Bereich der Oberflächentemperatur der Werkstoffprobe dar. Zusätzlich wird oftmals ein Weißstandardsensor eingesetzt, dessen Temperaturmessung eine untere Grenze dieses Bereichs bereitstellt. Somit kann die Probentemperatur eingegrenzt werden und es kann gegebenenfalls als erste Näherung für die Probentemperatur der arithmetische Mittelwert der gemessenen Temperaturen angenommen werden.

Vor der Inbetriebnahme müssen die vorstehend beschriebenen Temperatursensoren kalibriert werden. Die genannten Schwarz- und Weißstandardsensoren sowie Schwarztafelsensoren werden z. Zt. im sogenannten Kontaktthermometrieverfahren kalibriert, wobei jeweils ein Standardsensor mit einem Mess-Sensor verglichen wird. Dabei liegen zwei baugleiche Sensoren nebeneinander auf einer Wärmeplatte mit der schwarzen (bzw. weißen) Beschichtung auf der Wärmeplatte. Alternativ dazu können auch beide Sensoren in ein Öl- oder Wasserbad gebracht werden. Der Standardsensor ist bereits zuvor in einem Öl- oder Wasserbad mittels eines Standardthermometers wie eines Quecksilber-Thermometers kalibriert worden und stellt somit einen auf ein PTB-Normal (Physikalisch-Technische Bundesanstalt) rückführbaren Temperaturstandard dar. Es werden nun auf der Wärmeplatte (oder dem Öl- oder Wasserbad) veränderliche Temperaturen hergestellt. Dann wird ein Ausgangssignal der Messumformerschaltung, in die der Platinwiderstand des zu kalibrierenden Temperatursensors integriert ist, mit der mit dem Standard-Temperatursensor gemessenen Temperatur kalibriert.

Ein Nachteil dieses konventionellen Kalibrierverfahrens ist, dass die Kalibrierung unter Ausschluss der Beeinflussungsfaktoren Xenonstrahlung, Feuchte und Luftbewegung durchgeführt wird, gerade diese Faktoren jedoch in der Realität die Oberflächentemperatur in Bewitterungsgeräten oder der Freibewitterung bestimmen. Kontaktprobleme bei den elektrischen Temperatursensoren und kleinere Unterschiede im Aufbau, die unter realen Verhältnissen zu Temperaturunterschieden führen können, werden nicht erkannt.

Ein weiterer Nachteil des herkömmlichen Kontaktthermometrieverfahrens besteht darin, dass der dabei verwendete Standard-Temperatursensor selbst vollständig wie der zu kalibrierende Mess-Temperatursensor ausgerüstet und als solcher kalibriert sein muss. Er muss somit entsprechend dem oben beschriebenen Aufbau einen an der Rückseite der Metallplatte thermisch angekoppelten Platinwiderstand mitsamt der dazugehörigen elektrischen Messumformerschaltung aufweisen. Um als Standard-Temperatursensor eingesetzt werden zu können, muss er in einem Öl- oder Wasserbad kalibriert werden. Die Bereitstellung des Standard-Temperatursensors stellt sich somit als ziemlich aufwändig dar.

Die Druckschrift US-A-5, 707, 146 beschreibt ein Verfahren zur Kalibration von Thermoelementen, bei welchem Strahlung einer modulierten Lichtquelle auf die Spitze des Thermoelements fokussiert wird, die Emissivität und die Temperatur der Spitze des Thermoelements durch erste und zweite Pyrometer gemessen werden, und die von den ersten und zweiten Pyrometern gemessene Emissivität und Temperatur mit der von dem Thermoelement gemessenen Temperatur verglichen werden.

Es ist demzufolge Aufgabe der vorliegenden Erfindung, ein Verfahren zur Kalibrierung eines in Bewitterungsgeräten einsetzbaren Temperatursensors wie eines Schwarztafelsensors, eines Schwarzstandardsensors oder eines Weißstandardsensors, anzugeben, welches mit reduziertem Aufwand und unter Bedingungen durchgeführt werden kann, wie sie im Betrieb eines Bewitterungsgerätes innerhalb der Bewitterungskammer vorherrschen.

Diese Aufgabe wird durch die Merkmale des unabhängigen Patentanspruchs 1 gelöst. Vorteilhafte Weiterbildungen und Ausführungsarten des erfindungsgemäßen Verfahrens sind in den Unteransprüchen angegeben.

Der zu kalibrierende Temperatursensor ist als ein Schwarztafelsensor, Schwarzstandardsensor oder Weißstandardsensor ausgeführt. Der Temperatursensor ist derart beschaffen, dass er ein in einer elektrischen Schaltung wie einer Messumformerschaltung enthaltenes temperaturabhängiges elektrisches Bauelement aufweist. Dieses Bauelement ist ein temperaturabhängiger Widerstand, insbesondere ein Platinwiderstand.

Ein wesentlicher Gedanke der vorliegenden Erfindung besteht darin, dass während der Kalibrierung eine kontaktlose Temperaturmessung innerhalb eines Bewitterungsgeräts durchgeführt wird. Diese kontaktlose Temperaturmessung wird von der Oberfläche des Referenz-Temperatursensors durchgeführt.

Die kontaktlose Temperaturmessung erfolgt dadurch, dass im Verfahrensschritt c) die Schwarzkörperstrahlung der Oberfläche gemessen und aus dieser die Temperatur bestimmt wird. Dies kann mit einem handelsüblichen Pyrometer erfolgen, welches zumindest in dem dem interessierenden Temperaturbereich entsprechenden Messbereich kalibriert ist. Mit dem Pyrometer wird unter einem bestimmten definierten Winkel ein Messfleck auf der Oberfläche des Referenz-Temperatursensors fixiert und die von diesem Messfleck in den entsprechenden Raumwinkel emittierte Schwarzkörperstrahlung erfasst und daraus die Oberflächentemperatur bestimmt.

Die vorliegende Erfindung betrifft den Fall, dass die Emissivität der Oberfläche des zu kalibrierenden Temperatursensors nicht bekannt ist. Die praktische Erfahrung mit Beschichtungsmaterialien von Schwarzstandardsensoren oder Schwarztafelsensoren hat in der Tat gezeigt, dass insbesondere solche Schwarzlackierungen, die aufgrund ihrer großen Alterungsbeständigkeit besonders begehrt für den Einsatz als Beschichtungen bei Schwarzstandard- oder Schwarztafelsensoren sind, Emissivitäten besitzen, die nicht genau bekannt sind. Bevor die Emissivität in aufwändiger Weise bestimmt wird, kann das erfindungsgemäße Verfahren in solchen Fällen derart durchgeführt werden, dass ein Referenz-Temperatursensor mit einer Oberfläche mit bekannter Emissivität eingesetzt wird. Im Verfahrensschritt b) wird sowohl auf der Oberfläche des zu kalibrierenden Temperatursensors als auch auf der Oberfläche des Referenz-Temperatursensors unter gleichen Bedingungen eine veränderliche Temperatur erzeugt, so dass davon ausgegangen werden kann, dass die Oberflächentemperaturen beider Sensoren gleich sind. Im Verfahrensschritt c) braucht dann lediglich die Temperatur der Oberfläche des Referenz-Temperatursensors kontaktlos gemessen werden und mit dieser gemessenen Temperatur kann dann im Verfahrensschritt d) das Ausgangssignal der elektrischen Schaltung des Platinwiderstands des zu kalibrierenden Temperatursensors kalibriert werden. Gewünschtenfalls kann parallel dazu auch noch die Schwarzkörperstrahlung des zu kalibrierenden Temperatursensors gemessen werden, so dass durch Vergleich der Messungen der Schwarzkörperstrahlungen an dem Referenz-Temperatursensor und dem zu kalibrierenden Temperatursensor die Emissivität der Oberfläche des letzteren bestimmt werden kann.

Da aufgrund der nicht bekannten Emissivität der Oberfläche des zu kalibrierenden Temperatursensors ein Referenz-Temperatursensor eingesetzt werden muss, so weist dieser jedoch nicht den komplizierten Aufbau des bei dem konventionellen Kontaktthermometrieverfahren verwendeten Standard-Temperatursensors auf. Der hier zu verwendende Referenz-Temperatursensor benötigt beispielsweise kein thermisch angekoppeltes temperaturabhängiges Widerstandselement an der Rückseite mitsamt zugehöriger Schaltung. Stattdessen kann der Referenz-Temperatursensor lediglich aus einer Metallplatte bestehen, die ein- oder beidseitig mit der gewünschten Lackierung (schwarz oder weiß) mit bekannter Emissivität beschichtet ist. Ein derartig aufgebauter Referenz-Temperatursensor stellt für diese Ausführungsvariante des erfindungsgemäßen Verfahrens einen auf ein PTB-Normal rückführbaren Temperaturstandard dar.

Das erfindungsgemäße Verfahren ermöglicht es ferner, dass es unter Bedingungen durchgeführt werden kann, wie sie typischerweise innerhalb der Bewitterungskammer eines im Betrieb befindlichen Bewitterungsgeräts vorherrschen. Dies ermöglicht eine Kalibrierung von Schwarz- und Weißstandardsensoren sowie Schwarztafelsensoren, während diese von den im Betrieb auftretenden Beeinflussungsfaktoren wie Lichtstrahlung der Xenonlampe, Luftströmung und Feuchtigkeit beaufschlagt werden. Diese Faktoren bestimmen in der Realität die Oberflächentemperatur der Sensoren.

Die in einem Bewitterungsgerät herrschenden Bedingungen werden zum einen maßgeblich durch die Lichtstrahlung des Xenonstrahlers bestimmt. Um bei dem erfindungsgemäßen Kalibrierverfahren annähernd gleiche Bedingungen bereitzustellen, kann somit vorgesehen sein, im Verfahrensschritt b) die veränderliche Temperatur durch Beaufschlagung der Oberfläche des Temperatursensors und derjenigen des Referenz-Temperatursensors mit einer dem Sonnenspektrum entsprechenden Strahlung, insbesondere der Strahlung einer Xenonlichtquelle hervorzurufen. Des Weiteren kann vorgesehen sein, eine ebensolche Luftbewegung der Umgebungsluft in unmittelbarer Nähe der Oberflächen der Sensoren hervorzurufen, wie sie in Bewitterungsgeräten erzeugt wird. Es kann demgemäß ein Luftstrom erzeugt werden, der parallel zu den Oberflächen der Sensoren an diesen vorbeistreicht.

Die vorgenannten Bedingungen werden dadurch bereitgestellt, indem das Kalibrierverfahren in einer Vorrichtung für die künstliche Bewitterung von Proben durchgeführt wird.

Die vorliegende Anmeldung beschreibt ferner beispielshalber nicht zur Erfindung gehörige Vorrichtungen zur Durchführung des erfindungsgemäßen Verfahrens, entsprechend zwei verschiedener Varianten. Bei einer ersten Variante wird eine Positioniervorrichtung bereitgestellt, welche Mittel zur Aufnahme und Halterung des zu kalibrierenden Temperatursensors und gegebenenfalls des Referenz-Temperatursensors und Mittel zur Halterung des kontaktlos messenden Temperatursensors, insbesondere des Pyrometers, aufweist. Zur Durchführung des Kalibrierverfahrens muss dann dafür gesorgt werden, dass dem zu kalibrierenden Temperatursensor Wärme zugeführt wird, vorzugsweise durch Beaufschlagung mit Strahlungsenergie von einer Xenonstrahlungsquelle. Bei einer zweiten Variante wird ein kommerzielles Bewitterungsgerät umgebaut, so dass das erfindungsgemäße Verfahren darin durchgeführt werden kann. Es sind zu diesem Zweck Mittel zur Aufnahme und Halterung des zu kalibrierenden Temperatursensors und gegebenenfalls des Referenz-Temperatursensors innerhalb der Bewitterungskammer vorzusehen, wobei diese Mittel auch durch den Probenhalterrahmen gegeben sein können. Des Weiteren sind Mittel zur Befestigung eines kontaktlosen Temperatursensors (wie ein Pyrometer) an einer Außenwand der Bewitterungskammer vonnöten sowie mindestens eine Öffnung in der Außenwand, so dass das Pyrometer auf die in der Bewitterungskammer gehaltenen Temperatursensoren ausrichtbar ist.

Die Erfindung wird nachfolgend unter Bezugnahme auf die Zeichnungen noch näher erläutert, in denen Ausführungsbeispiele gezeigt sind. Es zeigen:
- Fig. 1: einen Längsschnitt durch einen zu kalibrieren- den Schwarzstandardsensor;
- Fig. 2a, b, c: eine nicht zur Erfindung gehörige Positionier- vorrichtung als Teil einer Vorrichtung zur Durchführung des Kalibrierverfahrens in per- spektivischer Sicht (a), in einer Seitenan- sicht (b) und in einer Vorderansicht (c), und
- Fig. 3: eine Teilansicht des Innenraums eines zur Durchführung des Kalibrierverfahrens angepass- ten Bewitterungsgeräts.

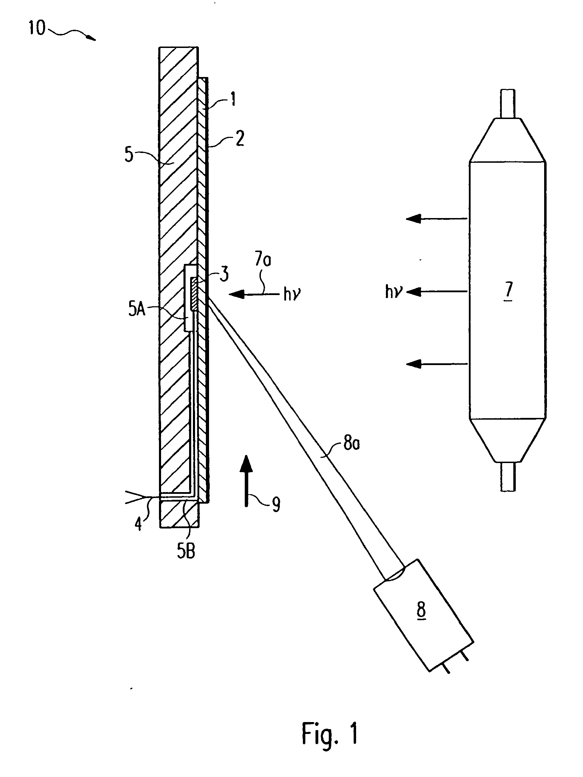

In der Fig. 1 ist ein Schwarzstandardsensor 10 dargestellt, wie er typischerweise in Vorrichtungen zur künstlichen Bewitterung für die Überwachung der Temperatur der zu untersuchenden Werkstoffproben eingesetzt wird. Ein derartiger Schwarzstandardsensor 10 wird dabei in unmittelbarer Nachbarschaft der Werkstoffproben mit derselben geometrischen Ausrichtung wie diese in Bezug auf die Xenonstrahlungsquelle gehaltert. Der Schwarzstandardsensor 10 ist in der Fig. 1 in einem Längsschnitt entlang einer durch das Zentrum, d.h. den Platinwiderstand 3 verlaufenden Ebene, dargestellt.

Der Schwarzstandardsensor 10 weist eine rechteckige Edelstahlplatte 1 auf, die auf einer ihrer Hauptoberflächen mit einer Schwarzlackierung 2 oder schwarzen Beschichtung versehen ist. Während des bestimmungsgemäßen Gebrauchs des Schwarzstandardsensors 10 wie auch während der Kalibrierung desselben ist die Schwarzlackierung 2 der Xenonstrahlungsquelle 7 zugewandt. Auf der ungeschwärzten Rückseite der Edelstahlplatte 1 ist ein Platinwiderstand 3 montiert, wobei für eine optimale thermische Ankopplung gesorgt ist. Im Übrigen ist auf die Rückseite der Edelstahlplatte 1 eine wärmeisolierende Kunststoffplatte 5 aus PVDF (Polyvinylidenfluorid) aufgebracht. Die Kunststoffplatte 5 weist in ihrem Zentrum eine der Edelstahlplatte 1 zugewandte Aussparung 5A auf, innerhalb der sich der Platinwiderstand 3 befindet. An die Aussparung 5A schließt sich eine bis zu der der Edelstahlplatte 1 abgewandten Oberfläche der Kunststoffplatte 5 verlaufende Durchführung 5B an. Die Durchführung 5B dient der Zuführung der elektrischen Zuleitungsdrähte 4 zu dem Platinwiderstand 3. Über die Zuleitungsdrähte 4 ist der Platinwiderstand 3 mit einer geeigneten elektrischen Schaltung verbunden, in der der Widerstandswert des Platinwiderstands 3 in ein Stromsignal von 4-20 mA übersetzt wird. Für die Kalibration wird der Schwarzstandardsensor 10 mit der Lichtstrahlung 7a der Xenonstrahlungsquelle 7 beaufschlagt, welche in der Fig. 1 nicht maßstabsgetreu in Bezug auf den Schwarzstandardsensor 10 dargestellt ist. Wie noch erläutert werden wird, kann das Kalibrierungsverfahren innerhalb eines Bewitterungsgerätes mit der darin enthaltenen Xenonstrahlungsquelle 7 durchgeführt werden. Zusätzlich wird ein Luftstrom 9 erzeugt, der in unmittelbarer Nähe zur Oberfläche der Metallplatte 1 an dieser vorbeistreicht, wobei der Luftstrom 9 durch ein Gebläse erzeugt werden kann. Alternativ dazu oder zusätzlich kann der Schwarzstandardsensor auch in eine Drehbewegung um die Xenonstrahlungsquelle 7 versetzt werden, so dass der in diesem Fall senkrecht zur Bildebene gerichtete Luftstrom lediglich in einer Relativbewegung zwischen dem Schwarzstandardsensor 10 und der Umgebungsluft besteht.

Die kontaktlose Temperaturmessung erfolgt durch ein handelsübliches, kalibriertes Pyrometer 8, welches einen spektralen Empfindlichkeitsbereich von 8-14 µm besitzt, wobei hier in der Fig. 1 der nicht zur vorliegenden Erfindung gehörige Fall gezeigt ist, dass die kontaktlose Temperaturmessung an dem zu kalibrierenden Temperatursensor selbst erfolgt. Das Pyrometer 8 erfasst die von einem Fleck mit einem Durchmesser zwischen 10 und 20 mm auf der geschwärzten Oberfläche der Edelstahlplatte 1 in einen Raumwinkel 8a emittierte Schwarzkörperstrahlung und berechnet aus dieser unter Berücksichtigung der Emissivität der Schwarzlackierung 2 die Oberflächentemperatur. Für den für die vorliegende Erfindung allein maßgebenden Fall, dass die Emissivität der Schwarzlackierung 2 des zu kalibrierenden Temperatursensors 10 nicht bekannt ist, wird in unmittelbarer Umgebung des zu kalibrierenden Temperatursensors 10 ein Referenz-Temperatursensor mit einer Schwarzlackierung mit bekannter Emissivität angeordnet und von diesem mittels des Pyrometers 8 die Schwarzkörperstrahlung gemessen. Mit der daraus berechneten Oberflächentemperatur wird der Platinwiderstand 3 bzw. das Ausgangssignal der mit ihm verbundenen elektrischen (Messumformer-)Schaltung kalibriert.

Der von der Temperaturmessung an sich unabhängige eigentliche Kalibriervorgang ist im Stand der Technik bekannt. Wie bereits erwähnt, ist der Platinwiderstand 3 (Pt100 o. Pt1000) über die Zuleitungsdrähte 4 mit einer geeigneten elektrischen Schaltung verbunden. Diese kann beispielsweise eine kommerziell erhältliche programmierbare Messumformerschaltung sein, wie sie beispielsweise von der Firma Intelligent Instrumentation unter der Bezeichnung "DSCP80 Modul" kommerziell erhältlich und unter der Internet-Adresse http://www.sensor-interface.de/dscp80.html unter Angabe eines Blockschaltbildes näher beschrieben ist.

Vor dem eigentlichen Kalibriervorgang wird zunächst ein Widerstand mit einer geeigneten Messbrücke bestimmt. Für die Platinwiderstände Pt100 oder Pt1000 existieren Tabellenwerke, die den Zusammenhang zwischen dem gemessenen Widerstand und der Temperatur darstellen. Diese Kurven können durch Polynome angenähert werden. Eine analytische Lösung für das Polynom der Pt100-Kurve existiert nicht, weshalb bei der Berechnung t(R) oftmals nur bis zum Term 2. Ordnung gerechnet wird. Der Widerstandswert wird mit der programmierbaren Messumformerschaltung in ein Stromsignal von 4-20 mA (oder ein digitales Signal) übersetzt, wobei der untere Wert 20°C und der obere Wert 180°C entspricht. Diese solchermaßen vorprogrammierte Messumformerschaltung wird dann mit dem erfindungsgemäßen Verfahren kalibriert, wobei in diesem Ausführungsbeispiel mit Kalibrieren eigentlich ein Einstellen und Justieren der Messumformerschaltung auf die mit dem Pyrometer gemessene Temperatur bedeutet. Es werden dabei im Wesentlichen nacheinander zwei Temperaturwerte der Oberflächentemperatur durch Steuerung der Strahlungsleistung der Xenonstrahlungsquelle 7 eingestellt. Beispielsweise wird die Strahlungsleistung zunächst so eingestellt, dass mit dem Pyrometer ein unterer Wert von 60°C gemessen wird. Mittels einer Offset-Regelung des DSCP80-Messumformers wird dieser dann so eingestellt, dass er ebenfalls eine Temperatur von 60°C anzeigt. Dann wird die Strahlungsleistung erhöht, so dass das Pyrometer einen oberen Wert von 120°C anzeigt. Mittels einer Verstärkungs-Regelung des DSCP80-Messumformers wird dieser dann so eingestellt, dass er ebenfalls die Temperatur von 120°C anzeigt. Dieser Vorgang ist unter Umständen mehrmals nacheinander iterativ auszuführen. Allerdings hat sich in der Praxis gezeigt, dass bereits die erste Einstellung ausreicht und dass lediglich zur Überprüfung nochmals zwei Temperaturwerte angefahren werden sollten. Werden dann allerdings Abweichungen größer 1°C festgestellt, muss das Kalibrierverfahren noch einmal durchgeführt werden.

Für die Durchführung des erfindungsgemäßen Verfahrens gibt es im Prinzip die folgenden zwei Möglichkeiten. Zum einen kann in einer nicht zur Erfindung gehörigen Weise eine geeignete Positioniervorrichtung bereitgestellt werden, auf der einerseits der zu kalibrierende Temperatursensor und der Referenz-Temperatursensor und andererseits das Pyrometer in reproduzierbarer Weise relativ zueinander positioniert werden können. Für die Kalibrierung muss dann eine Strahlungsquelle in die Nähe der Temperatursensoren gebracht werden, wobei zu diesem Zweck auch ein Bewitterungsgerät in die Nähe der Positioniervorrichtung gebracht werden kann. Zum anderen kann das erfindungsgemäße Verfahren dadurch durchgeführt werden, indem ein existierendes Bewitterungsgerät in geeigneter Weise umgebaut wird.

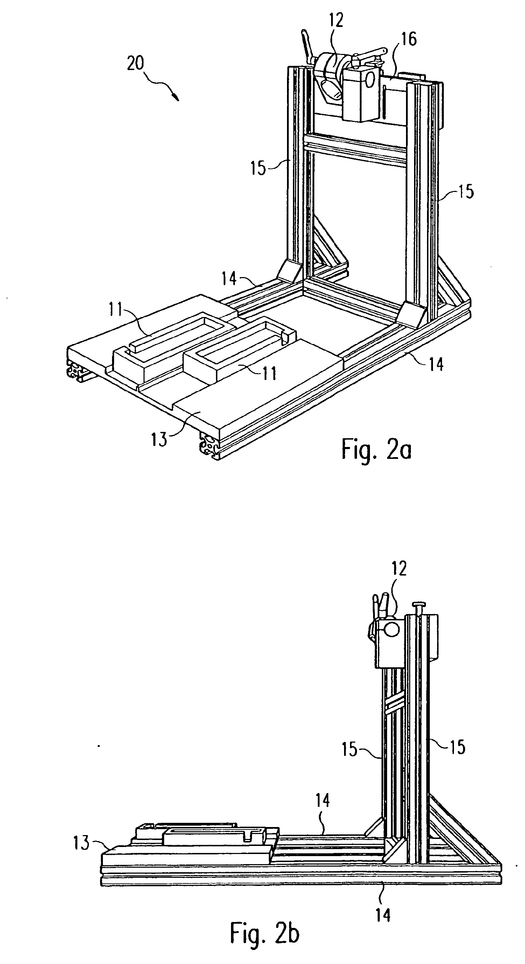

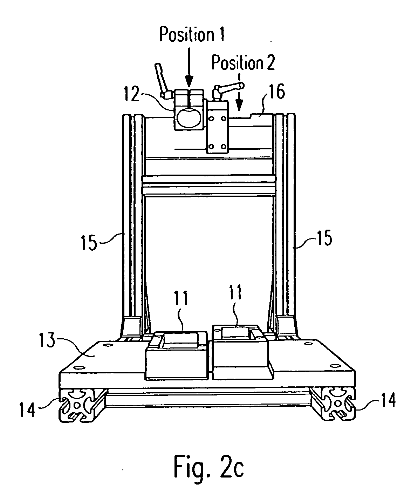

In den Figuren 2a, b und c ist die zuerst genannte Variante aus verschiedenen Blickrichtungen dargestellt. Es handelt sich dabei um eine Positioniervorrichtung 20, die zwei parallele horizontale Profilschienen 14 aufweist, an denen an ihrem einen Ende zwei vertikale parallele Profilschienen 15 befestigt sind. Auf den horizontalen Profilschienen 14 ist eine Plattform 13 aufgesetzt, die entlang der Profilschienen 14 verschoben und an gewünschter Position an diesen befestigt werden kann. Auf der Plattform 13 sind zwei quaderförmige Aufnahmeblöcke 11 nebeneinander derart angeordnet, dass sie in Führungsrinnen, die parallel zu den Profilschienen 14 verlaufen, in Richtung der Profilschienen 14 verschieblich sind. Die Aufnahmeblöcke 11 weisen jeweils auf ihrer oberen Seite rechteckige Vertiefungen auf, in die die Temperatursensoren eingelegt werden können. Die Aufnahmeblöcke 11 können an jeder gewünschten Position an der Plattform 13 befestigt werden.

An ihrem oberen Ende sind die vertikalen Profilschienen 15 durch eine horizontale Profilschiene 16 miteinander verbunden. Auf der Oberseite der horizontalen Profilschiene 16 kann eine Klemmvorrichtung 12 für ein Pyrometer in zwei Positionen befestigt werden, in denen das Pyrometer auf jeweils eine der beiden in den Aufnahmeblöcken 11 positionierten Temperatursensoren ausrichtbar ist, wie insbesondere in der Fig. 2c zu sehen ist. Die Klemmvorrichtung 12 besteht im Wesentlichen aus einem röhrenförmigen Hohlraum, in welchen das Pyrometer von einer Seite eingeschoben und darin festgeklemmt werden kann.

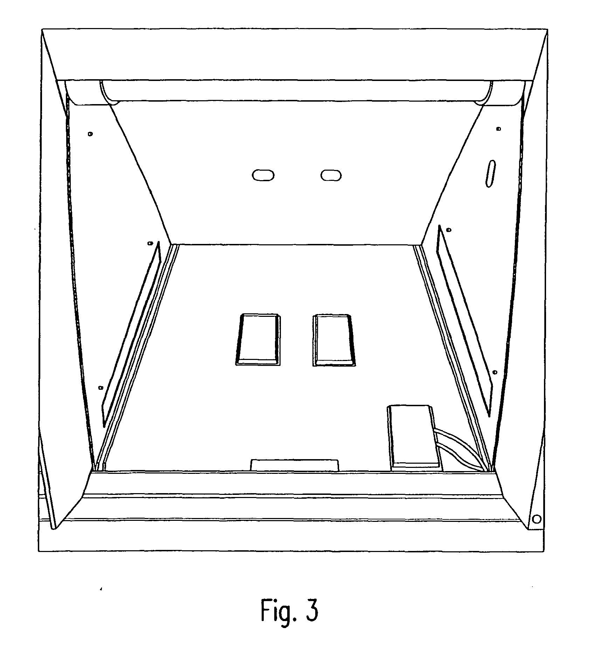

Bezüglich der zweitgenannten Variante zur Durchführung des erfindungsgemäßen Verfahrens wird eine existierende Vorrichtung zur künstlichen Bewitterung von Werkstoffproben derart umgebaut oder angepasst, dass das erfindungsgemäße Verfahren damit durchgeführt werden kann. Dies bedeutet im Wesentlichen, dass innerhalb des Bewitterungsgerätes auf einer der Innenwände Aufnahme- und Halterungsabschnitte für die Temperatursensoren vorzusehen sind. In der Fig. 3 ist eine perspektivische Ansicht eines Teils des Innenraums eines künstlichen Bewitterungsgeräts gezeigt. Auf der horizontalen unteren Innenwand sind der zu kalibrierende Temperatursensor und der Referenz-Temperatursensor nebeneinander positioniert. In der in Längsrichtung der Temperatursensoren befindlichen vertikalen Innenwand sind zwei Öffnungen geformt, durch die das von außen befestigte Pyrometer auf den Referenz-Temperatursensor ausrichtbar ist. Hierbei reicht es im Prinzip aus, wenn lediglich eine Öffnung in die Gehäusewand geformt wird, da bei der Kalibrierung prinzipiell eine kontaktlose Temperaturmessung an dem Referenz-Temperatursensor ausreicht. Da aufgrund unbekannter Emissivität des zu kalibrierenden Temperatursensors zusätzlich ein Referenz-Temperatursensor vorhanden ist, so muss lediglich die Temperatur an diesem gemessen und auf den zu kalibrierenden Temperatursensor kalibriert werden. Vorzugsweise werden jedoch zwei Öffnungen geformt, damit von vornherein die Möglichkeit besteht, mit dem außen befestigten Pyrometer beide für die Aufnahme der Temperatursensoren vorgesehenen Aufnahmebereiche anvisieren zu können. Das Pyrometer kann von außen mit einem Schnappriegel oder dgl. befestigt werden.

## Patentansprüche

1. Verfahren zur Kalibrierung eines Schwarztafel-, Schwarzstandard- oder Weißstandard-Temperatursensors eines Bewitterungsgeräts, wobei der Temperatursensor ein in einer elektrischen Schaltung enthaltenes temperaturabhängiges elektrisches Bauelement aufweist, mit folgenden Verfahrensschritten:
a) ein Referenz-Temperatursensor wird im Bewitterungsgerät positioniert;
b) auf einer Oberfläche des zu kalibrierenden Temperatursensors und auf einer Oberfläche bekannter Emissivität des Referenz-Temperatursensors wird unter gleichen Bedingungen eine veränderliche Temperatur erzeugt, damit die Oberflächentemperaturen beider Temperatursensoren gleich sind;
c) die Temperatur der Oberfläche des Referenz-Temperatursensors wird kontaktlos gemessen, indem die Schwarzkörperstrahlung dieser Oberfläche gemessen und aus dieser unter Berücksichtigung der bekannten Oberflächen-Emissivität die Oberflächentemperatur bestimmt wird; und
d) ein Ausgangssignal der elektrischen Schaltung wird mit der gemessenen Oberflächentemperatur kalibriert.

2. Verfahren nach Anspruch 1,
**dadurch gekennzeichnet, dass** die Messung der Schwarzkörperstrahlung im Verfahrensschritt b) mit einem kalibrierten Pyrometer durchgeführt wird.

3. Verfahren nach Anspruch 2,
**dadurch gekennzeichnet, dass** im Verfahrensschritt b) die innerhalb eines definierten Raumwinkels von der Oberfläche emittierte Schwarzkörperstrahlung gemessen wird.

4. Verfahren nach einem der vorhergehenden Ansprüche, **dadurch gekennzeichnet, dass** im Verfahrensschritt a) die veränderliche Temperatur durch Beaufschlagung der Oberflächen der Temperatursensoren mit einer dem Sonnenspektrum entsprechenden Strahlung hervorgerufen wird.

5. Verfahren nach einem der vorhergehenden Ansprüche, **dadurch gekennzeichnet, dass** im Bereich der Oberflächen der Temperatursensoren ein zu den Oberflächen paralleler Luftstrom erzeugt wird.

## Claims

1. A method for calibrating a black temperature panel sensor, a black standard temperature sensor or a white standard temperature sensor of a weathering apparatus, wherein the temperature sensor comprises a temperature-dependent electric device which is included in an electric circuit, comprising the following method steps:
a) a reference temperature sensor is positioned in the weathering apparatus;
b) a variable temperature is produced on a surface of the temperature sensor to be calibrated and on a surface of known emissivity of the reference temperature sensor under equal conditions so that the surface temperatures of both temperature sensors are equal;
c) the temperature of the surface of the reference temperature sensor is measured contactlessly, wherein the black body radiation of this surface is measured and the surface temperature is determined therefrom by considering the known surface emissivity; and
d) an output signal of the electric circuit is calibrated with the measured surface temperature.

2. The method according to claim 1, **characterized in that**
the measurement of the black body radiation in method step c) is carried out with a calibrated pyrometer.

3. The method according to claim 2, **characterized in that**
in method step c) the black body radiation emitted from the surface is measured within a defined space angle.

4. The method according to any of the preceding claims, **characterized in that**
in method step b) the variable temperature is generated by applying the surfaces of the temperature sensors with a radiation corresponding to the solar spectrum.

5. The method according to any of the preceding claims, **characterized in that**
an air-stream parallel to the surfaces is generated in the region of the surfaces of the temperature sensors.

## Revendications

1. Procédé pour le calibrage d'un capteur de température pour une armoire d'intempéries accélérées, d'un capteur de température pour standard de noir ou d'un capteur de température pour standard de blanc d'un appareil simulant des conditions climatologiques dans lequel le capteur de température présente un élément de construction électrique et indépendant de la température contenu dans un circuit électrique et qui comporte les étapes de procédé suivantes :
a) un capteur de température de référence qui est positionné dans l'appareil simulant des conditions climatologiques ;
b) une température modifiable est générée sous les mêmes conditions sur une surface du capteur de température à calibrer et sur une surface du capteur de température de référence d'une émissivité connue afin que les températures surfaciques des deux capteurs de température soient identiques ;
c) la température de la surface du capteur de température de référence est mesurée sans contact en ce que le rayonnement du corps noir de cette surface est mesuré et en ce que la température surfacique est déterminée sous la prise en considération de cette émissivité surfacique connue ; et
d) un signal de sortie du circuit électrique est calibré avec la température surfacique mesurée.

2. Procédé selon la revendication 1,
**caractérisé en ce que**
la mesure du rayonnement du corps noir est exécutée dans l'étape de procédé b) avec un pyromètre calibré.

3. Procédé selon la revendication 2,
**caractérisé en ce que**
dans l'étape de procédé b) le rayonnement du corps noir émis par la surface est mesuré à l'intérieur d'un angle défini dans l'espace.

4. Procédé selon l'une des revendications précédentes,
**caractérisé en ce que**
dans l'étape de procédé a) la température modifiable peut être ajustée par la sollicitation des surfaces des capteurs de température avec un capteur et est générée avec un rayonnement qui correspond au spectre solaire. En principe, il suffit ici alors si seulement une ouverture est conformée dans la paroi de boîtier car, lors du calibrage, une mesure de la température sans contact sur le capteur de température de référence est en principe suffisante. Comme, en raison d'une émissivité inconnue du capteur de température à calibrer, un capteur de température de référence est présent en supplément, c'est seulement la température sur celui-ci qui doit être mesurée et qui doit être calibrée sur le capteur de température à calibrer. De préférence, deux ouvertures sont toutefois conformées afin qu'il existe de prime abord la possibilité de pouvoir viser les deux plages de réception prévues pour la réception des capteurs de température avec le pyromètre fixé à l'extérieur. Le pyromètre peut être fixé de l'extérieur avec un pêne à enclenchement ou similaire.

5. Procédé selon l'une des revendications précédentes,
**caractérisé en ce que**
un flux d'air parallèle aux surfaces est généré dans la zone des surfaces des capteurs de température.
